# FASCICULE DE BREVET EUROPEEN

(11) **EP 1 220 517 B1**
(45) Date de publication et mention de la délivrance du brevet: **17.05.2006**
(21) Numéro de dépôt: 01205014.2
(22) Date de dépôt: 19.12.2001
(51) Int. Cl.: H04M 1/02, H04M 1/725

(54) **Appareil électronique comportant deux parties mobiles l'une par rapport à l'autre**
Elektronische Vorrichtung mit zwei zueinander beweglichen Teilen
Electronic device comprising two movable parts in relation to each other

(30) Priorité: 28.12.2000 FR 0017204
(43) Date de publication de la demande: 03.07.2002
(73) Titulaire: Cellon France SAS, 72100 Le Mans (FR)
(72) Inventeur: Lubowicki, Jean-Pierre, 75008 Paris (FR)
(74) Mandataire: Kohn, Philippe

(56) Documents cités:
- US-A- 5 491 507
- US-A- 5 719 936
- US-A- 5 818 701
- US-A- 6 128 475
- US-A- 6 149 442

## Description

L'invention concerne un appareil électronique qui comporte deux parties qui sont mobiles l'une par rapport à l'autre.

L'invention concerne plus particulièrement un appareil électronique qui comporte deux parties qui sont mobiles l'une par rapport à l'autre et qui sont susceptibles d'être reliées électriquement entre elles de façon qu'au moins l'une d'entre elles transmette des informations à l'autre pour commander des fonctions de l'appareil électronique.

La conception d'appareils électroniques, notamment les téléphones mobiles de type GSM, est influencée d'une part par la miniaturisation des appareils et, d'autre part, par l'augmentation du nombre de fonctions et par l'amélioration des interfaces avec un utilisateur de façon à faciliter leur utilisation et à permettre la commande simple, ergonomique et agréable des fonctions.

Ainsi, il existe des appareils électroniques de petite taille qui permettent de réaliser un certain nombre de fonctions et qui comportent des interfaces avec l'utilisateur, telles qu'un clavier de touches et un écran de dimensions réduites. Il existe aussi des appareils de taille plus importante qui permettent de réaliser un nombre de fonctions plus élevé et qui comporte par exemple un écran de dimensions supérieures permettant notamment une utilisation plus agréable de l'appareil et un affichage d'une plus grande quantité d'informations.

Ainsi, de façon générale les dimensions de l'appareil ainsi que les fonctions qu'il est susceptible de réaliser sont prédéterminées.

Le document US-A-5.303.291 propose et représente un téléphone mobile qui comporte un couvercle mobile dans lequel est monté un module fonctionnel, tel qu'une calculatrice ou une horloge électronique.

Le module fonctionnel peut être détaché et remplacé par un autre module permettant de réaliser des fonctions différentes. Il est monté pivotant sur le boîtier du téléphone entre une position fermée dans laquelle il recouvre le clavier de touches de l'appareil pour le protéger, et une position ouverte dans laquelle il permet l'accès et l'actionnement des touches par l'utilisateur du téléphone.

Lorsque le module fonctionnel est en position fermée, le téléphone présente des dimensions réduites. Cependant, l'utilisation du téléphone n'est pas possible, puisque le clavier de touches est recouvert par le module fonctionnel empêchant ainsi la prise de ligne et la numérotation.

Les documents US-A-5.719.936, US-A-6.149.442, et US-A-6.128.457 décrivent des radiotéléphones portables comportant deux parties mobiles l'une par rapport à l'autre de manière à occuper deux ou trois positions relatives l'une par rapport à l'autre.

En fonction de la position relative des parties les unes par rapport aux autres, l'appareil est apte à réaliser un premier ou un deuxième groupe de fonctions.

Cependant, malgré le nombre de positions relatives des parties du radiotéléphone, l'appareil n'est apte à réaliser qu'un nombre limité de fonctions, ce qui réduit l'efficacité d'une telle modularité du radiotéléphone.

Pour résoudre ces problèmes, l'invention propose un appareil électronique qui comporte deux parties qui sont mobiles l'une par rapport à l'autre et qui sont susceptibles d'être reliées électriquement entre elles de façon qu'au moins l'une d'entre elles transmette des informations à l'autre pour commander des fonctions de l'appareil électronique, les deux parties étant montées coulissantes l'une par rapport à l'autre, entre une position rétractée dans laquelle l'appareil électronique permet de réaliser un premier groupe de fonctions et une position déployée dans laquelle l'appareil électronique permet de réaliser un deuxième groupe de fonctions, **caractérisé en ce que** les deux parties peuvent être séparées l'une de l'autre, et en ce que, après séparation, au moins l'une d'elles permet de réaliser, de façon autonome, un troisième groupe de fonctions comportant des fonctions distinctes des fonctions du premier groupe et du deuxième groupe, en sus de fonctions du premier groupe et/ou du deuxième groupe.

Selon d'autres caractéristiques de l'invention:
- l'une des deux parties constitue un corps permettant de réaliser un groupe de fonctions de base et l'autre partie constitue un module fonctionnel séparable permettant de réaliser une gamme d'appareils à partir d'un même corps ;
- le coulissement d'une position à une autre permet de commander l'activation ou la désactivation d'au moins une fonction de l'appareil électronique ;
- l'appareil électronique consiste en un téléphone, notamment un téléphone mobile du type GSM, et une première partie comporte un clavier de touches et constitue un corps par rapport auquel la seconde partie, qui comporte un écran de visualisation, est montée coulissante ;
- en position rétractée une première portion de l'écran de visualisation accessible à travers une ouverture du corps, permet la visualisation d'informations, telles qu'un numéro de téléphone, et en position déployée, une seconde portion de l'écran, préalablement masquée par le corps, permet la visualisation d'informations supplémentaires telles que des pictogrammes ou des parties de texte ;
- lorsque les deux parties sont séparées, la seconde partie constitue un dispositif électronique autonome, tel qu'un dispositif d'aide mémoire ou un organiseur.

D'autres caractéristiques et avantages de l'invention apparaîtront à la lecture de la description détaillée qui suit pour la compréhension de laquelle on se reportera aux dessins annexés parmi lesquels :
- la figure 1 représente en perspective une première partie, formant corps, d'un téléphone mobile réalisé selon l'invention ;
- la figure 2 représente en perspective une seconde partie, du téléphone mobile, réalisé selon l'invention ;
- la figure 3 représente en perspective, en vue de dessous, la seconde partie du téléphone mobile représentée à la figure précédente ;
- la figure 4 représente schématiquement un téléphone mobile réalisé selon l'invention, en position rétractée de la seconde partie ;
- la figure 5 représente schématiquement un téléphone mobile réalisé selon l'invention en position déployée de la seconde partie ;
- la figure 6 est une section transversale partielle du téléphone mobile selon la ligne 6-6 représentée à la figure 5 ;
- la figure 7 représente de façon schématique une section longitudinale du téléphone mobile selon une variante de réalisation de l'invention ;
- la figure 8 représente, en perspective, une seconde partie modulaire du téléphone mobile selon une variante de réalisation de l'invention.

Dans la suite de la description, l'appareil électronique est, à titre non limitatif, un téléphone 10 mobile notamment du type GSM.

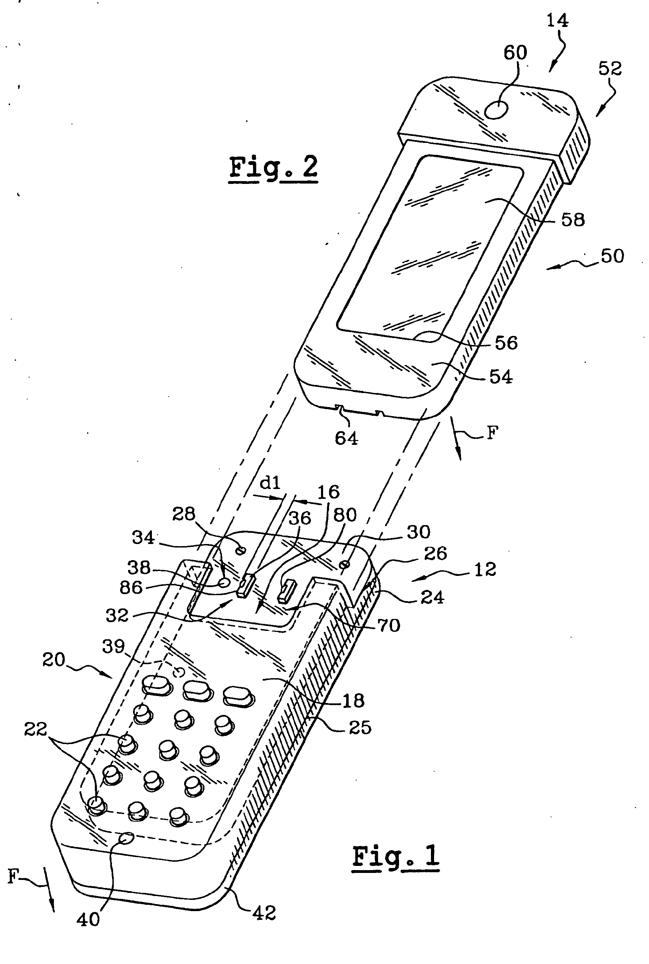

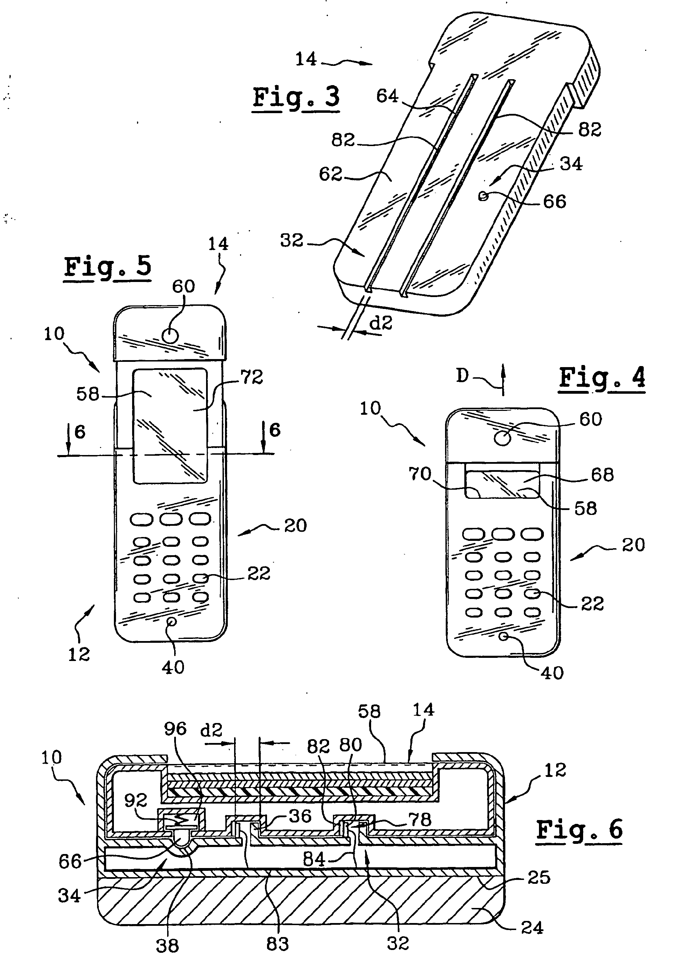

Les figures 1 et 2 représentent en perspective une première partie 12 qui constitue un corps et une seconde partie 14 respectivement qui sont susceptibles d'être assemblées pour former un téléphone mobile 10 qui est représenté aux figures 4 et 5.

Dans la suite de la description, on utilisera une orientation supérieure inférieure conformément au sens de haut en bas de la flèche F représentée aux figures 1 et 2.

La première partie 12 constitue le corps du téléphone 10. Elle se compose de parois latérales qui délimitent un logement 16 parallélépipédique.

La paroi latérale supérieure avant 18 ou paroi latérale principale, comporte un clavier 20 formé de touches 22 réparties en cinq rangées horizontales de trois touches 22 chacune.

Chaque touche 22 est mobile entre une position de repos et une position d'actionnement dans laquelle elle est susceptible de coopérer avec un organe de déclenchement d'un commutateur électrique associé, non représenté.

Lorsqu'une touche 22 est en position d'actionnement, l'état électrique d'un circuit électrique de commande associé est modifié de façon à commander au moins une fonction du téléphone 10.

La première partie 12 comporte ici un dispositif de transmission 24, qui permet de recevoir et d'émettre des informations, c'est-à-dire de communiquer avec un dispositif similaire.

Le dispositif de transmission 24 peut être rapporté sur la face inférieure 25 de la paroi latérale arrière 26 et être fixé par des vis 28 dont deux d'entre elles sont représentées sur la figure 1.

La face supérieure 30 de la paroi latérale arrière 26 comporte des moyens 32 de guidage en translation ainsi que des moyens 34 d'arrêt en position de la seconde partie 14 par rapport à la première partie 12.

Les moyens 32 de guidage consistent ici en deux nervures 36 qui sont parallèles entre elles et qui sont orientées selon la direction longitudinale principale de la première partie 12. Les nervures 36 sont susceptibles de coopérer avec des formes en creux, telles que des nervures réalisées dans la seconde partie 14.

Les moyens d'arrêt 34 comportent ici des cavités 38 et 39 qui sont susceptibles de coopérer avec un doigt escamotable de la seconde partie 14, lorsque la première 12 et la seconde 14 parties sont assemblées.

La première partie comporte aussi un microphone dont un orifice 40 permet de faciliter la transmission de la voix de l'utilisateur vers le microphone.

La première partie 10 comporte encore une batterie d'accumulateurs 42 qui est fixée sur la face inférieure de la paroi arrière 26.

La batterie d'accumulateurs 42 permet notamment d'alimenter électriquement une plaque à circuits imprimés de la première partie 12 qui comporte des circuits électroniques qui permettent de gérer les informations de commande provenant notamment du clavier 20 de touches 22, du dispositif de transmission 24 et de la seconde partie 14 lorsqu'elle est assemblée avec la première partie 12.

La seconde partie 14 se compose d'une première portion 50 de forme parallélépipédique complémentaire du logement 16, est d'une seconde portion 52 qui constitue une extrémité libre du téléphone 10.

La forme de la seconde portion 52 est définie de façon que l'aspect extérieur du téléphone 10 soit harmonieux.

La face supérieure 54 de la seconde partie 14 comporte une fenêtre 56 qui est traversée par un écran de visualisation 58, tel qu'un écran de visualisation à cristaux liquides, qui est ici rectangulaire.

L'écran de visualisation 58, aussi appelé écran, permet d'afficher des informations qui peuvent être très variées telles que des chiffres, des lettres, des pictogrammes, des dessins ou des images, de façon à être visualisées par l'utilisateur du téléphone 10.

L'écran de visualisation 58 est commandé par des circuits électriques de commande qui comportent notamment les circuits de commande associés aux touches 22.

L'écran de visualisation 58 peut aussi être un dispositif de type tactile, c'est-à-dire qu'il peut être commandé par pression du doigt de l'utilisateur sur une zone déterminée de l'écran.

La seconde partie 14 comporte un dispositif d'émission de sons, non représenté, dont un orifice 60, qui est situé sur la face supérieure 54 de la seconde portion 52, permet de faciliter la transmission des sons vers l'oreille de l'utilisateur.

La figure 3 représente en perspective, vue de dessous, la seconde partie 14. Elle comporte sur sa face inférieure 62 les moyens 32, de guidage en translation longitudinale, complémentaires des nervures 36. Les moyens de guidage 32 consistent en deux rainures 64 parallèles entre elles.

La face inférieure 62 porte aussi les moyens d'arrêt 34 qui comportent un doigt escamotable 66 qui est susceptible de coopérer avec les cavités 38 et 39, lorsque les deux parties 12 et 14 sont assemblées.

Conformément à l'invention, les deux parties 12 et 14 peuvent être assemblées et montées coulissantes l'une par rapport à l'autre entre une position rétractée et une position déployée représentées aux figures 4 et 5 respectivement.

La figure 4 représente schématiquement le téléphone 10 formé par les deux parties 12 et 14 en position rétractée. Dans cette position, une première portion 68 de l'écran de visualisation 58 est accessible à travers une ouverture 70 de la première partie 12 de façon à permettre la visualisation des informations présentées sur la première portion de l'écran 58. En position rétractée, le téléphone 10 permet de réaliser un premier groupe de fonctions.

Le premier groupe de fonctions consiste notamment en la numérotation ou composition d'un numéro de téléphone par l'appui sur des touches 22 du clavier 20, l'affichage du numéro de téléphone appelé sur la première portion 68 de l'écran de visualisation 58, la mise en communication avec un autre téléphone, etc.

Ainsi, en position rétractée, le téléphone 10 est compact, il présente une face avant de petites dimensions.

En position déployée représentée à la figure 5, une seconde portion 72 de l'écran de visualisation 58, qui est masquée par paroi latérale supérieure avant 18 en position rétractée, est accessible.

Lorsque le téléphone 10 est en position déployée, l'utilisateur peut visualiser des informations présentées sur la première portion 68 et la seconde portion 72 de l'écran 58. Ainsi, il est possible de visualiser des informations supplémentaires par rapport aux informations visualisées en position rétractée, telles que des pictogrammes ou des parties de texte.

En position déployée, le téléphone 10 permet de réaliser un deuxième groupe de fonctions qui correspond ici au premier groupe auquel s'ajoutent de nouvelles fonctions telles que la communication du téléphone 10 avec le réseau Internet ainsi que la présentation d'informations supplémentaires, par exemple des pictogrammes ou des parties de texte.

La position déployée permet l'accès à une portion importante de l'écran 58 ce qui permet la visualisation d'une quantité d'informations importantes, les informations pouvant être présentées sous plusieurs formes telles que des lettres, des chiffres des symboles ou des pictogrammes ce qui facilite l'utilisation du téléphone 10.

Le confort d'utilisation de l'interface visuel, ici l'écran 58, est ainsi amélioré.

De plus, si l'écran de visualisation 58 est du type tactile, il permet de simplifier et de rendre plus agréable la commande de certaines fonctions par l'appui du doigt de l'utilisateur sur certaines zones.

Ainsi, en position déployée, le téléphone 10 présente une face avant de dimensions plus importantes que lorsque le téléphone 10 est en position rétractée. Il permet ainsi la visualisation de plus d'informations ce qui augmentent les potentialités du téléphone 10 et son confort d'utilisation.

Il est ainsi possible de proposer de nombreuses fonctions à l'utilisateur, telles que des jeux, un accès au réseau Internet, la possibilité de recevoir, de visualiser et de transmettre des images.

De façon à communiquer entre elles, la première partie 12 et la deuxième partie 14 sont reliées électriquement lorsqu'elles sont assemblées l'une à l'autre.

La figure 6 représente, à grande échelle, une section transversale du téléphone 10. La figure 6 représente notamment une liaison électrique 78 entre les deux parties 12 et 14.

La liaison électrique 78 est réalisée par le contact de deux lames conductrices 80 de la première partie 12 avec deux pistes complémentaires 82 de la seconde partie 14.

Les lames conductrices 80 sont reliées à la plaque 83 à circuits imprimés de la première partie 12 par des fils ou pistes 84 conducteurs.

De façon similaire, les pistes complémentaires 82 sont reliées à l'écran de visualisation 58.

À titre d'exemple, la liaison électrique 78 est agencée dans les moyens 32 de guidage.

Les lames 80 sont chacune agencées dans une face latérale 86 d'une nervure 36. Les lames 80 sont bombées transversalement.

Les lames 80 sont élastiques et, lorsque les deux parties 12 et 14 ne sont pas assemblées, leur sommet s'étend transversalement au-delà des faces latérales 86 correspondantes. Ainsi, la distance d1, représentée à la figure 1, qui sépare le sommet d'une lame 80 et la face latérale opposée de la nervure 36 correspondante est supérieure à la largeur d2 de la rainure 64 dans laquelle la nervure 36 s'engage.

Ainsi, conformément à la figure 6, la lame 80 de chaque nervure 36 est en contact avec la piste 82 associée.

Les propriétés élastiques de la lame 80 permettent de supprimer le jeu de fonctionnement transversal qui existe entre la rainure 64 et la nervure 36 associée, ce qui optimise le guidage transversal des parties 12 et 14 l'une par rapport à l'autre et permettent d'assurer un contact permanent entre la lame 80 et la piste 82 associée.

La liaison électrique 78 peut comporter, sur une même face latérale d'une nervure 36, plusieurs pistes 80 de hauteur réduite qui sont décalées verticalement et qui coopèrent chacune avec une piste conductrice 82 associée. Il est aussi possible d'agencer plusieurs lames 80 sur chacune des faces latérales 86 des nervures 36 pur réaliser plusieurs connexions électriques entre la première 12 et la seconde 14 parties.

Selon une variante, la lame 80 peut s'étendre sur la face supérieure d'une nervure 36, la piste 82 correspondante étant alors fixée dans la face en vis-à-vis de la rainure 64 correspondante.

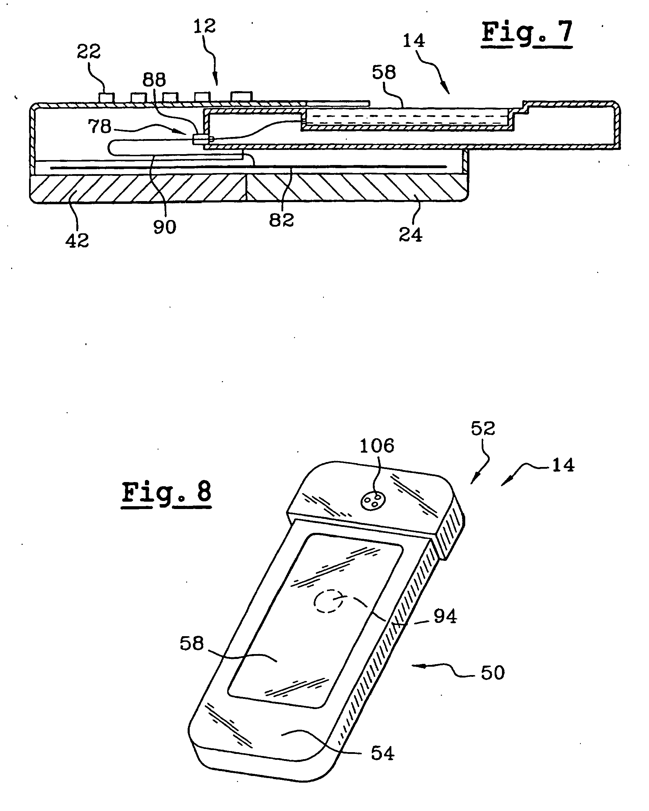

Selon une autre variante, représentée à la figure 7, la liaison électrique 78 peut être réalisée par un connecteur 88 qui est relié à la plaque 83 à circuits imprimés par une nappe de conducteurs souples 90. Ainsi, lors du coulissement de la seconde partie 14 dans le corps 12, la nappe de conducteurs souples 90 se déforme pour suivre le mouvement du connecteur 88.

La figure 6 représente aussi en section transversale, les moyens d'arrêt 34 qui permettent de maintenir le téléphone 10 en position déployée.

En effet, les moyens d'arrêt 34 comportent notamment une cavité 38 qui coopère avec le doigt escamotable 66 en position déployée de façon à immobiliser le coulissement relatif de la première partie 12 par rapport à la seconde partie 14.

Le doigt escamotable 66 est rappelé en permanence vers une position sortie, représentée à la figure 6, par un élément élastique 92, tel qu'un ressort.

Lorsque le téléphone 10 est en position rétractée, le doigt escamotable 66 coopère avec la cavité 39.

Pour provoquer le coulissement de la seconde partie 14 vers la position déployée, l'utilisateur doit exercer un effort de traction longitudinal déterminé selon l'orientation D représentée à la figure 4. L'effort de traction longitudinal doit être suffisant pour provoquer l'escamotage du doigt 66 dans son logement 96. Ensuite, un effort moindre suffit à faire coulisser la seconde partie 14 dans la première partie 12 jusqu'à ce que le téléphone 10 soit en position déployée, conformément aux figures 5 et 6, et que le doigt 66 coopère avec la cavité 38.

Le coulissement de la position rétractée vers la position déployée peut permettre de commander une fonction telle que la prise d'une communication ou l'activation de l'éclairage l'écran de visualisation 58.

De façon similaire, le coulissement de la position déployée vers la position rétractée peut permettre de couper la communication ou d'éteindre l'éclairage de l'écran 58.

Selon l'invention les première 12 et seconde 14 parties peuvent être séparées. Pour ce faire, lorsque le téléphone 10 est en position déployée, l'utilisateur doit exercer l'effort de traction longitudinal déterminé pour provoquer l'escamotage du doigt 66. Le coulissement permet alors la séparation des deux parties 12 et 14.

Selon l'invention, après la séparation, la seconde partie 14 permet de réaliser, de façon autonome, un troisième groupe de fonctions. Ainsi la seconde partie 14 comporte une plaque à circuits imprimés qui permet de gérer des informations de commande pour réaliser les fonctions du troisième groupe.

Par exemple, la seconde partie 14 peut constituer un dispositif électronique autonome tel qu'un dispositif d'aide mémoire ou un "organiseur".

Dans ce cas, la seconde partie 14 doit comporter une batterie d'accumulateurs, non représentée, qui peut être rechargée par la batterie d'accumulateurs 42 de la première partie 12, lorsque les deux parties 12 et 14 sont assemblées, ou simultanément avec celle-ci.

La batterie d'accumulateurs de la seconde parties 14 peut aussi être une batterie d'accumulateurs de la première partie 12 en position assemblée.

La commande des fonctions de l'organiseur peut être réalisée par l'écran lui-même s'il est du type tactile ou par des touches, non représentées, qui sont avantageusement agencées dans la face supérieure 54.

L'invention propose aussi que le téléphone 10 soit modulaire, c'est-à-dire que la première partie 12 constitue un corps qui permet de réaliser un groupe de fonctions de base telles que la numérotation de numéros de téléphone à partir des touches 22 du clavier 20 ou la communication avec un dispositif similaire, et que la deuxième partie 14 constitue un module fonctionnel séparable qui permet de réaliser une gamme d'appareils à partir du même corps 12.

Ainsi, il est possible d'assembler des secondes parties 14 différentes avec une première partie unique 12.

Par exemple, la seconde partie 14 représentée à la figure 2 peut comporter un écran de visualisation 58 en noir et blanc, il peut aussi comporter un écran 58 en couleur.

Conformément à la figure 8, la seconde partie 14 peut encore comporter un dispositif de vision 94 tel qu'une caméra vidéo, des cellules photovoltaïques et un dispositif d'amplification 96 du son qui permet de réaliser un téléphone 10 dit "mains libres".

L'invention permet de modifier facilement certaines caractéristiques du téléphone 10, telles que le nombre de ses fonctions ou son aspect extérieur. En effet, l'assemblage et le désassemblage du téléphone 10 ne nécessitent aucun outil particulier.

La modularité du téléphone 10 permettant de réaliser une gamme d'appareils peut être effectuée en usine. Dans ce cas un seul corps 10 peut être utilisé pour plusieurs secondes parties modulaires 14 de façon à proposer plusieurs modèles présentant des caractéristiques esthétiques et fonctionnelles différentes. Cela permet de diminuer les coûts de fabrication.

La modularité du téléphone 10 peut aussi être réalisée par l'utilisateur. Après avoir acheté un corps 12 et choisi une seconde partie 14, il peut ensuite acheter seulement une seconde partie modulaire 14 pour faire évoluer les caractéristiques de son téléphone 10, suivant l'évolution de ses envies et de ses besoins.

La description qui précède n'est pas limitative. En effet, il est possible, sans sortir du cadre de l'invention, de réaliser des inversions mécaniques telles qu'une inversion entre les nervures 36 et les rainures 64 des moyens 34 de guidage ou d'utiliser des équivalents.

De plus, il est possible que la première partie 12 soit aussi modulaire de façon à augmenter le nombre de combinaisons possibles et élargir la gamme de téléphones 10.

## Revendications

1. Appareil électronique qui comporte deux parties (12, 14) qui sont mobiles l'une par rapport à l'autre et qui sont susceptibles d'être reliées électriquement entre elles de façon qu'au moins l'une d'entre elles transmette des informations à l'autre pour commander des fonctions de l'appareil électronique, les deux parties (12, 14) étant montées coulissantes l'une par rapport à l'autre, entre une position rétractée dans laquelle l'appareil électronique permet de réaliser un premier groupe de fonctions et une position déployée dans laquelle l'appareil électronique permet de réaliser un deuxième groupe de fonctions, **caractérisé en ce que** les deux parties (12, 14) peuvent être séparées l'une de l'autre, et **en ce que**, après séparation, au moins l'une d'elles permet de réaliser, de façon autonome, un troisième groupe de fonctions comportant des fonctions distinctes des fonctions du premier groupe et du deuxième groupe, en sus de fonctions du premier groupe ou du deuxième groupe.

2. Appareil électronique selon la revendication précédente, **caractérisé en ce que** l'une des deux parties (12, 14) constitue un corps permettant de réaliser un groupe de fonctions de base et **en ce que** l'autre partie constitue un module fonctionnel séparable permettant de réaliser une gamme d'appareils à partir d'un même corps.

3. Appareil électronique selon l'une quelconque des revendications précédentes, **caractérisé en ce que** le coulissement d'une position à une autre permet de commander l'activation ou la désactivation d'au moins une fonction de l'appareil électronique.

4. Appareil électronique selon l'une quelconque des revendications précédentes, **caractérisé en ce qu'**il consiste en un téléphone (10), notamment un téléphone mobile du type GSM, et **en ce qu'**une première partie (12) comporte un clavier (20) de touches (22) et constitue un corps par rapport auquel la seconde partie (14), qui comporte un écran de visualisation (58), est montée coulissante.

5. Appareil électronique selon la revendication précédente, **caractérisé en ce qu'**en position rétractée une première portion (68) de l'écran (58) de visualisation accessible à travers une ouverture (70) du corps (12), permet la visualisation d'informations, telles qu'un numéro de téléphone, et **en ce qu'**en position déployée, une seconde portion (72) de l'écran, préalablement masquée par le corps (12), permet la visualisation d'informations supplémentaires telles que des pictogrammes ou des parties de texte.

6. Appareil électronique selon l'une des revendications 4 ou 5, **caractérisé en ce que** lorsque les deux parties (12, 14) sont séparées, la seconde partie (14) constitue un dispositif électronique autonome, tel qu'un dispositif d'aide mémoire ou un organiseur.

## Patentansprüche

1. Elektronische Vorrichtung mit zwei Teilen (12, 14), die zueinander beweglich und in der Lage sind, miteinander elektrisch verbunden zu werden, so dass wenigstens einer der beiden Informationen an den anderen überträgt, um die Funktionen der elektronischen Vorrichtung zu steuern, wobei die beiden Teile (12, 14) zueinander gleitbar in einer eingezogenen Position, in welcher es die elektronische Vorrichtung ermöglicht, eine erste Gruppe von Funktionen durchzuführen, und einer entfalteten Position, in welcher es die elektronische Vorrichtung ermöglicht, eine zweite Gruppe von Funktionen durchzuführen, befestigt sind, **dadurch gekennzeichnet, dass** die beiden Teile (12, 14) voneinander getrennt werden können, und **dadurch**, dass nach einem Trennen wenigstens einer der beiden Teile ermöglicht, unabhängig eine dritte Gruppe von Funktionen mit von den Funktionen der ersten Gruppe und der zweiten Gruppe unterschiedlichen Funktionen zusätzlich zu den Funktionen der ersten Gruppe oder der zweiten Gruppe durchzuführen.

2. Elektronische Vorrichtung gemäß dem vorausgegangenen Anspruch, **dadurch gekennzeichnet, dass** einer der beiden Teile (12, 14) einen Körper bildet, welcher es ermöglicht, eine Gruppe von Basisfunktionen durchzuführen, und der andere Teil ein abtrennbares Funktionsmodul bildet, welches es ermöglicht, eine Reihe an Vorrichtungen aus einem gleichen Körper herzustellen.

3. Elektronische Vorrichtung gemäß einem der vorausgegangenen Ansprüche, **dadurch gekennzeichnet, dass** das Gleiten von einer Position zu einer anderen die Steuerung des Aktivierens oder des Deaktivierens wenigstens einer Funktion der elektronischen Vorrichtung ermöglicht.

4. Elektronische Vorrichtung gemäß einem der vorausgegangenen Ansprüche, **dadurch gekennzeichnet, dass** die elektronische Vorrichtung aus einem Telefon (10), insbesondere einem Mobiltelefon der Art GSM, besteht, und ein erster Teil (12) eine Tastatur (20) mit Tasten (22) aufweist und einen Körper bildet, in Bezug auf welchen der zweite Teil (14), der einen Bildschirm zur Anzeige (58) aufweist, gleitbar befestigt ist.

5. Elektronische Vorrichtung gemäß dem vorausgegangenen Anspruch, **dadurch gekennzeichnet, dass** ein erster Bereich (68) des Bildschirms (58) zur Anzeige, welcher über eine Öffnung (70) des Körpers (12) zugänglich ist, in eingezogener Positionen die Anzeige von Informationen wie einer Telefonnummer ermöglicht, und **dadurch**, dass in entfalteter Position ein zweiter Bereich (72) des Bildschirms, der zuvor von dem Körper (12) bedeckt war, die Anzeige von zusätzlichen Informationen wie Piktogrammen oder Textteilen ermöglicht.

6. Elektronische Vorrichtung gemäß einem der Ansprüche 4 oder 5, **dadurch gekennzeichnet, dass**, wenn die zwei Teile (12, 14) getrennt sind, der zweite Teil (14) eine eigenständige elektronische Vorrichtung wie beispielsweise eine elektronische Planungshilfe oder einen Organizer bildet.

## Claims

1. An electronic apparatus which comprises two mutually movable parts (12, 14) which can be electrically interconnected so that at least one of them transmits data to the other so as to control functions of the electronic apparatus, the two parts (12, 14) being mounted mutually slidable between a retracted position in which the electronic apparatus permits to carry out a first group of functions, and an open position in which the electronic apparatus permits to carry out a second group of functions,
**characterized in that** the two parts (12, 14) can be separated from each other and **in that**, after separation, at least one of them permits to carry out in an autonomous way a third group of functions separated from the functions of the first group and of the second group, in addition to the functions of the first group and of the second group.

2. An electronic apparatus as claimed in the preceding claim, **characterized in that** one of the two parts (12, 14) forms a body which permits to carry out a group of basic functions and **in that** the other part is in the form of a separable function module, which permits to realize a range of apparatuses based on the same body.

3. An electronic apparatus as claimed in any one of the preceding claims, **characterized in that** the sliding from one position to another permits to control the activation or deactivation of at least one function of the electronic apparatus.

4. An electronic apparatus as claimed in any one of the preceding claims, **characterized in that** it comprises a telephone (10), notably a mobile GSM telephone, and **in that** a first part (12) comprises a keypad (20) with keys (22) and constitutes a body with respect to which the second part (14), which comprises a display screen (58), is mounted slidable.

5. An electronic apparatus as claimed in the preceding claim, **characterized in that** in retracted position a first portion (68) of the display screen (58) which is accessible through an opening (70) of the body (12) permits to display data such as a telephone number, and **in that** in an open position a second portion (72) of the screen, previously masked by the body (12), permits to display additional data such as pictograms or text parts.

6. An electronic apparatus as claimed in one of the claims 4 or 5, **characterized in that**, when the two parts (12, 14) are separated, the second part (14) constitutes an autonomous electronic device such as a memory aid or an organizer.
